# EUROPEAN PATENT SPECIFICATION

(11) **EP 2 285 695 B1**
(45) Date of publication and mention of the grant of the patent: **10.08.2016**
(21) Application number: 09766922.0
(22) Date of filing: 12.05.2009
(51) Int. Cl.: B65B 59/00, B65B 41/16, B65B 9/22, F16B 7/04

(54) **PACKAGING MACHINE FOR FORMING A TUBE FROM A WEB MATERIAL**
VERPACKUNGSMASCHINE ZUM FORMEN EINES SCHLAUCHS VOM FLACHBAHNMATERIAL
EMPAQUETEUSE POUR LA FORMATION D'UNE GAINE À PARTIR D'UNE BANDE CONTINUE DE MATÉRIAU PLAT

(30) Priority: 19.06.2008 SE 0801435
(43) Date of publication of application: 23.02.2011
(73) Proprietor: Tetra Laval Holdings & Finance S.A., 1009 Pully (CH)
(72) Inventor: JOHANSSON, Erik, SE-226 50 L nd (SE); SVENLE, Martin, SE-280 60 Broby (SE); GUSTAVSSON, Peter, SE-291 70 Kristianstad (SE)
(74) Representative: Jönrup, Emil
(86) International application number: PCT/SE2009/000239
(87) International publication number: WO 2009/154532

(56) References cited:
- EP-A2- 0 107 474
- WO-A1-2006/073339
- WO-A1-2006/073339
- DE-A1- 2 850 858
- FR-A1- 2 652 134
- GB-A- 920 923
- JP-A- 8 337 219
- JP-U- H03 102 414
- US-A- 2 113 658
- US-A- 3 423 113
- US-A- 4 519 185
- US-A- 4 566 922
- US-A- 6 044 615
- US-A1- 2007 209 320

## Description

### Technical Field

The present invention relates to a packaging machine forming a tube of material from a web of material, said machine using a bending roller with a par ticular suspension.

### Technical Background

Packaging containers used for containment of a product, such as a liquid or semi liquid foodstuff is commonly used today, said containers being formed from a packaging laminate comprising a core of paper or paperboard and a liquid-tight thermoplastic material laminated to at least one side of the paper core. The packaging laminate may optionally comprise additional barrier layers with the purpose of leakage or intrusion of liquid and/or gases.

In the production of such packaging containers a web of packaging laminate is formed into a tube, before the subsequent sealing of the longitudinally overlapping edges of the web. The longitudinally sealed tube is continuously filled with product, and then transversally sealed, cut into individual packaging containers having a cushion shape, which are subsequently formed into a generally parallelepipedic shape.

The web is often provided with a décor, and for this and other reason the longitudinal sealing is a delicate process, where a precise overlap must be maintained while not skewing or deforming the tube in any way.

The above and associated problems are thoroughly discussed in WO2006/073339, which concerns a device and method for controlling the twist of a tube.

In the forming of packages from web of packaging laminate the web is first sterilized and then led into a forming station, at the end of which the filling takes place.

In the forming station the web is deflected over a bending roller, from which it extends downstream to a lower forming tool. At the bending roller the web is still planar, and at the lower forming tool it has been reshaped to a tubular form. This is described in detail in the previously mentioned application, and will also be elucidated further in the present application. Between the bending roller and lower forming tool some additional guide means may be arranged, if necessary. The distance between the bending roller and the lower forming tool is referred to as "forming distance", which defines the length of the "forming section". The forming distance varies with a number of factors, such as web width, web thickness, and physical properties of the web material, such as stiffness, resilience, etc, of which the web width has proven to be the most significant.

This results in that it is not possible to use the same set-up in a forming station when producing packaging containers of varying size (using webs width varying widths), since the forming distance will vary. A consequence of this is that there is a need of storing several setups, which may be costly. A further consequence is that the time and effort spent on switching between setups is considerable.

Upstream the lower forming tool a filling tube is inserted in the, still existing, gap between the longitudinal edges of the web in order to fill product into the longitudinally sealed portion of the tube. The filling tube is bent and extends down into the tube of packaging laminate, down to the vicinity of the sealing tool.

### Summary

To solve problems in prior art, the present invention provides a versatile machine that can be adapted to work for packages of various sizes. The inventive device solves the above problems while offering additional advantages, as described in relation to the embodiments and as defined by the appended claims, and sub claims.

To that end the present invention provides a packaging machine reshaping a planar web of packaging laminate to an annular tube of packaging laminate by means of a forming section comprising,
- a bending roller, designed to deflect the path of the planar web,
- a lower forming tool, downstream the bending roller, defining an aperture through which the packaging laminate is led and given an annular shape, and
- guide means between the bending roller and the lower forming tool for guiding the path of the packaging laminate. The packaging machine is characterized in that the bending roller is arranged slidably on a bar extending in the direction of the web path upstream the lower forming tool, such that the forming distance between the lower forming tool and the bending roller may be varied by moving the latter along the bar.

The use of a suspension for a bending roller where the bending roller is slidably arranged on a bar makes the adaptation to various web properties by variation of the forming distance to an uncomplicated procedure. Instead of using several setups, the same setup may be used, which minimizes the need of several different setups, obviously, and also the need of storing spare parts for several different setups as well as simplifies the maintenance. As a consequence the costs related to keeping of stocks and repair may be minimized. Also, the downtime necessary during reconfiguration of the packaging machine to accommodate a different web is also reduced.

The bending roller is attached to the bar by means of levers, which are pivotable in a plane parallel to the extension of the bar. The possibility of pivoting the levers elongates the variation range regarding the forming distance, since this will be longer than the actual bar (the extension of the bar plus the length of the levers). Further, and maybe more importantly the distance between the plane of the web as it leaves the bending roller and the center of the lower forming tool may be varied. This parameter is referred to as the offset and it is a parameter that may be used to optimize the forming of the web. Generally the smaller diameter of the tube, the smaller the offset. The pivotable levers provides the opportunity of a continuously variable offset within the constraints of the levers.

The bar is rotatable around its central length axis. By rotating the bar, the inclination of the bending roller will be altered. A change in inclination will guide the web as it passes over the bending roller. One instance when this is particularly useful is when the web, which is delivered in large rolls of material, has a radius (i.e it would be curved if rolled out on a flat surface). The radius will make the web "float" on the roller, causing an unwanted twist of the tube formed by the web. The twist will in turn cause a dislocation of the lateral edges of the web as these are joined in the longitudinal seal. The result may be a non-satisfactory appearance of the resulting packaging container, and in particular its decor, and an insufficient sealing.

In one embodiment an adjustment device arranged on the outside of the device is electrically or mechanically coupled to the bar. As a new roll of web material, which may have a new radius, is loaded to the packaging machine the inclination of the bending roller may have to be altered. Therefore it is advantageous to have an adjustment device arranged on the outside of the packaging machine, so that the inclination may be altered without compromising the sterile conditions in the machine. In the embodiments (to be illustrated) the adjustment device is mechanically coupled to the bar and generally adjusted manually. It may, however, be controlled in any other way, such as by an electrical motor, using a sensor for detection of any "floating" or tube twisting.

### Brief description of the Drawings

Fig. 1 is a perspective view of a packaging machine according to prior art
Fig. 2 is a cross-sectional view of a portion of a packaging machine comprising an adjustable forming section according to a first embodiment of the invention, in a first position.
Fig. 3 is a detailed perspective view of the adjustable forming section of Fig. 2, in a second position, conforming to a different-size web and tube.
Fig. 4 is cross-sectional view of a portion of a packaging machine comprising an adjustable forming section according to a second embodiment of the invention, in a first position.
Fig, 5 is a detailed perspective view of the adjustable forming section of Fig. 4, in a second position, conforming to a different-size web and tube.

### Detailed Description

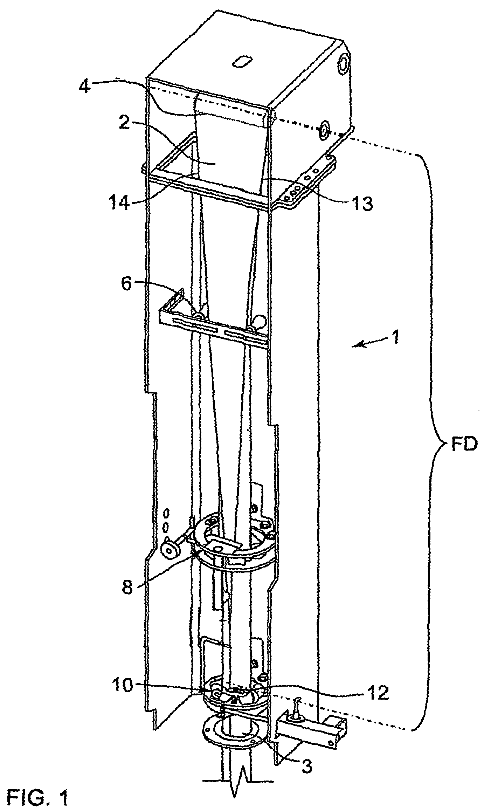

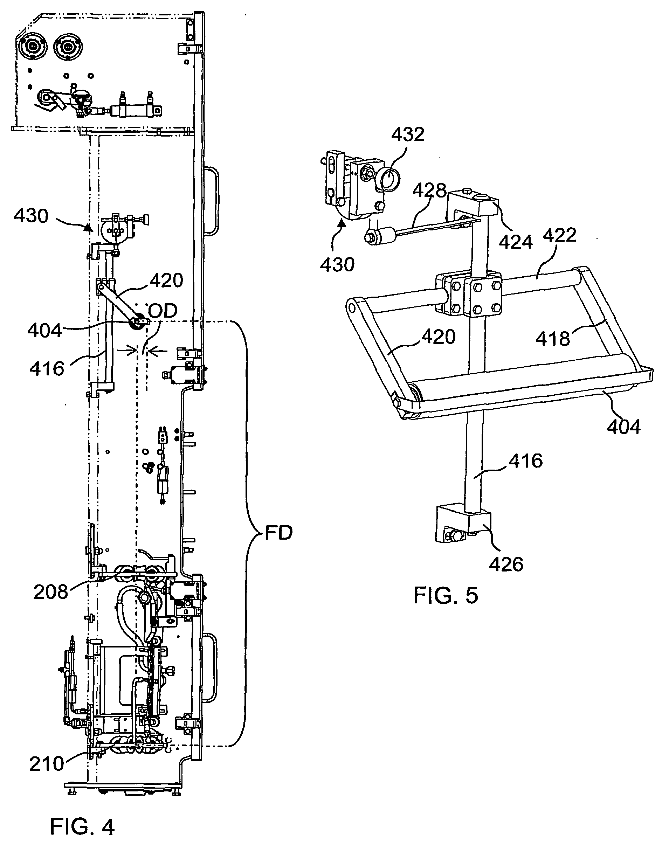

Fig. 1 illustrates a prior art packaging machine 1. In the forming section of the packaging machine a web 2 of packaging laminate is shaped into a tube 3. The web 2 is passed over a bending roller 4 which basically deflects the path of the web 2, via guide means 6, 8 to a lower forming tool 10, which has an opening trough which the web is led. Rollers 12 may define the circumference of the opening. The number of guide means 6, 8 between the bending roller 4 and the lower forming tool may vary, generally between one and three. The distance between the bending roller 4 and the lower forming tool is referred to as forming distance FD, and these and intermediate components define the forming section. Also the projected distance between the plane of the web 2 as it leaves the bending roller and the center of the lower forming tool 10 (basically the center of the formed tube) is referred to as the offset distance OD (see Fig. 4), or simply the offset. Note that the indication of FD and OD, respectively, in the drawings is not exact, merely illustrative.

Downstream the lower forming tool 10 the tube of packaging laminate is longitudinally sealed, by joining the lateral edges 13 and 14, respectively, of the web, and then transversally sealed and cut, to form individual packaging containers. These individual packaging containers may or may not be processed further (folded). The invention is thus not limited to use in connection with cushion shaped packages but could be used in manufacturing other types of packages, such as tetrahedron shaped and rectangular parallelepiped shaped packages, and generally all packaging containers being formed from a tube of packaging laminate, which is transversally sealed and cut.

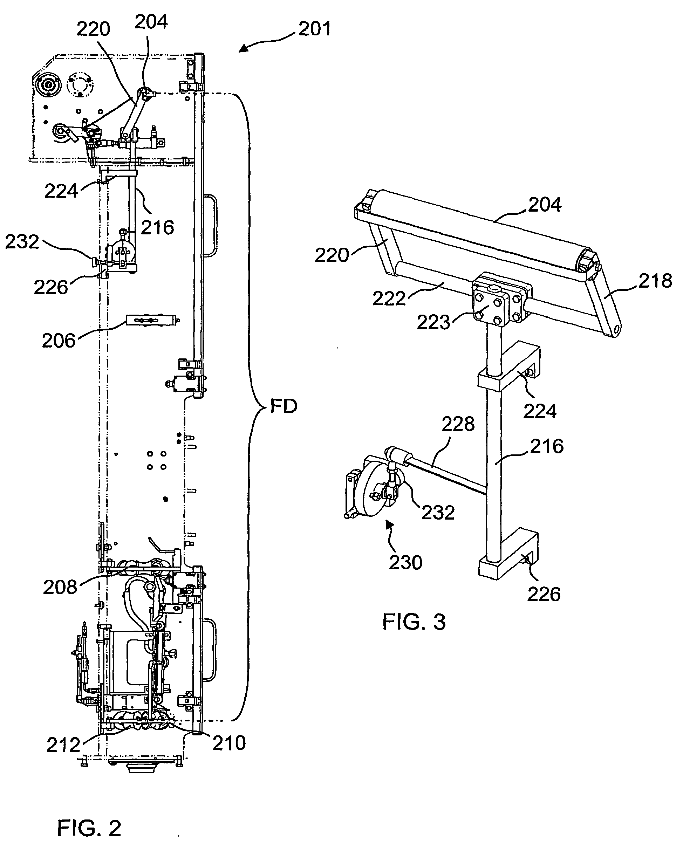

Fig. 2 illustrates a packaging machine 201 according to a first embodiment of the present invention, and Fig. 3 illustrates the inventive bending roller suspension according to one embodiment. A comparison with Fig. 1 facilitates the understanding of the packaging machine 201 of Fig. 1, and corresponding components have been given the same reference number, increased by 200.

In the machine 201 of the first embodiment the bending roller 204 is slidably arranged on a bar 216, The roller 204 is attached to the bar 216 via pivotable levers 218, 220 attached to an axle 222. The axle 222 is attached to the bar 216 via a connection unit 223, adapted to selectively clamp around the bar 216 and the axle 222. In this way the connection unit 223, and thereby the bending roller 204 may be slid up and down the bar 216, and the levers 218, 220 may be pivoted around the axle 222 in the connection unit 223. In this way, both the forming distance FD and the offset OD may be varied within the constraints of the bar 216 and the pivotable levers 218, 220. In a practical application the length of the pivotable levers 218, 220 are limited by stability constraints, and if the offset OD is to be altered outside these boundaries this may be achieved by altering the length of the brackets 224, 226 coupling the bar 216 to a wall of the packaging machine 201.

A rod 228 connects the bar 216 to an adjustment unit 230, which is arranged to turn the bar 216 around its length axis. By doing this the inclination of the bending roller 204 will be altered, which in turn will guide the web of packaging laminate. The main part of the adjustment unit 230, and at least an adjustment control thereof, may be located outside the protected atmosphere of the packaging machine 201. In this way the inclination of the bending roller 204 may be varied without jeopardizing the sterile conditions inside the packaging machine 201.

By sliding and pivoting the bending roller 204 the packaging machine 201 may be tuned for various web dimensions.

Figs. 4 and 5 correspond to Figs. 2 and 3, but illustrate a packaging machine and a roller suspension according to a second embodiment. The packaging machine of Fig. 4 is set up for smaller web widths, i.e., generally resulting in packaging containers having a smaller volume. In this embodiment the connection unit 423 is arranged between the brackets 424, 426. The numbering of components follows the same rules as for Fig. 2, though increased with 400 as compared to Fig. 1. For smaller web widths the required offset OD is generally smaller, why shorter brackets 424, 426 may be used. Also, one guide means has been omitted, since the shorter forming distance only requires the use of a single guide means.

The function of the adjustment unit 430 is the same as for the corresponding unit 230 of Fig. 2. The general function of the adjustment unit is to provide possibilities to control the inclination of the bending roller without jeopardizing the sterile conditions of the filling machine. It is obvious that this may be performed in several different ways, including purely mechanical solutions, as in the described embodiments, or more or less elaborate solutions using control motors and control devices to automatically control the inclination of the bending roller.

## Claims

1. A packaging machine reshaping a planar web of packaging laminate to an annular tube of packaging laminate by means of a forming section comprising,
- a bending roller (204;404), designed to deflect the path of the planar web,
- a lower forming tool (210;410), downstream the bending roller (204;404), defining an aperture through which the packaging laminate is led and given an annular shape, and
- guide means (206,208;408) between the bending roller (204;404) and the lower forming tool (210;410) for guiding the path of the packaging laminate, **characterized in** the bending roller (204;404) is arranged slidably on a bar (216;416) extending in the direction of the web path upstream the lower forming tool (210;410), such that the forming distance (FD) between the lower forming tool (210;410) and the bending roller (204;404) may be varied by moving the latter along the bar and wherein the bending roller (204;404) is attached to the bar (216;416) by means of levers (218,220;418,420), which are pivotabte in a plane parallel to the extension of the bar, and wherein the bar (216;416) is rotatable around its central length axis.

2. The packaging machine of claim 1, wherein an adjustment device (230;430) arranged on the outside of the device is electrically or mechanically coupled to the bar (216;416).

## Patentansprüche

1. Verpackungsmaschine, die mittels eines Formungsbereichs eine Flachbahn aus Verpackungslaminat in einen ringförmigen Schlauch aus Verpackungslaminat umformt, umfassend:
- eine Biegerolle (204; 404), die dahingehend konstruiert ist, den Verlauf der Flachbahn umzulenken,
- ein unteres Formungswerkzeug (210; 410) stromabwärts der Biegerolle (204; 404), das einen Durchlass definiert, durch den das Verpackungslaminat geführt und ihm eine Ringform verliehen wird, und
- Leitmittel (206, 208; 408) zwischen der Biegerolle (204; 404) und dem unteren Formungswerkzeug (210; 410) zum Leiten des Verlaufs des Verpackungslaminats,
**dadurch gekennzeichnet, dass** die Biegerolle (204; 404) verschiebbar auf einer Stange (216; 416) angeordnet ist, die sich in der Richtung des Bahnverlaufs stromaufwärts des unteren Formungswerkzeugs (210; 410) erstreckt, so dass die Formungsstrecke (FD) zwischen dem unteren Formungswerkzeug (210; 410) und der Biegerolle (204; 404) durch Bewegen Letzterer entlang der Stange variiert werden kann, und wobei die Biegerolle (204; 404) durch Hebel (218, 220; 418, 420) an der Stange (216; 416) befestigt ist, die in einer zur Erstreckung der Stange parallel verlaufenden Ebene schwenkbar sind, und wobei die Stange (216; 416) um ihre Mittellängsachse drehbar ist.

2. Verpackungsmaschine nach Anspruch 1, wobei eine Einstellvorrichtung (230; 430), die außen an der Vorrichtung angeordnet ist, mit der Stange (216; 416) elektrisch oder mechanisch gekoppelt ist.

## Revendications

1. Empaqueteuse pour reformer une bande plane de matériau stratifié d'emballage en un tube annulaire en matériau stratifié d'emballage au moyen d'une section de formage comprenant
- un rouleau de cintrage (204 ; 404), conçu pour dévier la trajectoire de la bande plane,
- un outil de formage inférieur (210 ; 410), en aval du rouleau de cintrage (204 ; 404), définissant une ouverture à travers laquelle le matériau stratifié d'emballage est acheminé et pourvu d'une forme annulaire, et
- des moyens de guidage (206, 208 ; 408) entre le rouleau de cintrage (204 ; 404) et l'outil de formage inférieur (210 ; 410) pour guider la trajectoire du matériau stratifié d'emballage,
**caractérisée en ce que** le rouleau de cintrage (204 ; 404) est disposé de manière à pouvoir coulisser sur une barre (216 ; 416) s'étendant dans la direction de la trajectoire de la bande en amont de l'outil de formage inférieur (210 ; 410) de telle sorte que la distance de formage (FD) entre l'outil de formage inférieur (210 ; 410) et le rouleau de cintrage (204 ; 404) puisse être modifiée en déplaçant ce dernier le long de la barre et le rouleau de cintrage (204 ; 404) étant attaché à la barre (216 ; 416) au moyen de leviers (218, 220 ; 418, 420) qui peuvent pivoter dans un plan parallèle au prolongement de la barre, et la barre (216 ; 416) pouvant tourner autour de son axe longitudinal central.

2. Empaqueteuse selon la revendication 1, dans laquelle un dispositif d'ajustement (230 ; 430) disposé à l'extérieur du dispositif est accouplé électriquement ou mécaniquement à la barre (216 ; 416).
